(19) Europäisches Patentamt / European Patent Office / Office européen des brevets

(11) **EP 3 933 449 B1**

(12) **EUROPEAN PATENT SPECIFICATION**

(45) Date of publication and mention
of the grant of the patent:
**14.05.2025   Bulletin 2025/20**

(21) Application number: **20305733.6**

(22) Date of filing: **30.06.2020**

(51) International Patent Classification (IPC):
***G01T 1/26*** *(2006.01)*

(52) Cooperative Patent Classification (CPC):
**G01T 1/26**

(54) **SYSTEM FOR DOSIMETRIC AND MICRO-DOSIMETRIC IONIZING RADIATION CHARACTERIZATION**

SYSTEM ZUR DOSIMETRISCHEN UND MIKRODOSIMETRISCHEN CHARAKTERISIERUNG IONISIERENDER STRAHLUNG

SYSTÈME DE CARACTÉRISATION DOSIMÉTRIQUE ET MICRO-DOSIMÉTRIQUE DES RAYONNEMENTS IONISANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.01.2022   Bulletin 2022/01**

(73) Proprietor: **Commissariat à l'Energie Atomique et aux Energies Alternatives
75015 Paris (FR)**

(72) Inventors:
• **ZAHRADNIK, IZABELLA
91191 GIF SUR YVETTE CEDEX (FR)**
• **POMORSKI, MICHAL
91140 Villebon sur Yvette (FR)**

(74) Representative: **Cabinet Nony
11 rue Saint-Georges
75009 Paris (FR)**

(56) References cited:
• **DAVIS JEREMY A ET AL: "A 3D lateral electrode structure for diamond based microdosimetry", APPLIED PHYSICS LETTERS, A I P PUBLISHING LLC, US, vol. 110, no. 1, 6 January 2017 (2017-01-06), XP012215119, ISSN: 0003-6951, [retrieved on 20170106], DOI: 10.1063/1.4973628**

• **ANDREO CRNJAC ET AL: "Electronic Properties of a Synthetic Single-Crystal Diamond Exposed to High Temperature and High Radiation", MATERIALS, vol. 13, no. 11, 29 May 2020 (2020-05-29), pages 2473, XP055753950, DOI: 10.3390/ma13112473**

• **DAVIS J A ET AL: "Characterization of a Novel Diamond-Based Microdosimeter Prototype for Radioprotection Applications in Space Environments", IEEE TRANSACTIONS ON NUCLEAR SCIENCE, IEEE SERVICE CENTER, NEW YORK, NY, US, vol. 59, no. 6, 1 December 2012 (2012-12-01), pages 3110 - 3116, XP011487453, ISSN: 0018-9499, DOI: 10.1109/TNS.2012.2218131**

• **KEITHLEY -: "Test Equipment Solutions Datasheet: 6517A Electrometer/High Resistance Meter", 5 August 2013 (2013-08-05), XP055754215, Retrieved from the Internet <URL:http://www.testequipmenthq.com/datasheets/KEITHLEY-6517A-Datasheet.pdf> [retrieved on 20201126]**

• **IZABELLA A. ZAHRADNIK ET AL: "scCVD Diamond Membrane based Microsimeter for Hadron Therapy", PHYSICA STATUS SOLIDI. A: APPLICATIONS AND MATERIALS SCIENCE, vol. 215, no. 22, 30 July 2018 (2018-07-30), DE, pages 1800383, XP055752957, ISSN: 1862-6300, DOI: 10.1002/pssa.201800383**

## Description

The present invention relates to dosimetric and micro-dosimetric ionizing radiation characterization.

## Background of the invention

Currently, most external radiotherapy treatments use photons to irradiate tumors. However, hadron therapy (using protons or carbon ions) damages tumor cells more effectively than photon therapy.

Charged particles have an inverse depth-dose distribution in comparison to photons, delivering a dose increasing with penetration depth up to a maximum at the end of the particles path (Bragg peak). This maximizes the dose transmitted to the cancerous area and reduces the dose transmitted to the healthy tissue.

Heavy ions such as carbon ions additionally show an increased Relative Biological Effectiveness (RBE). The RBE is defined as the ratio of the irradiated dose of ions to that of a reference photon energy that would be required to result in the same biological effect for both. To ensure a safe dose delivery and to fully take advantage of ion therapy, a reliable estimation of the RBE of the ion beams is required. A Microdosimetric Kinetic Model (MKM) may be used to predict the RBE of ion beams, based on microdosimetry, which rely on measurements of stochastic energy-deposition distributions in micro-sensitive volumes comparable in size to a human cell.

In routine clinical proton therapy, a constant RBE value of 1.1 is usually assumed. However, the RBE has been shown to vary with different Linear Energy Transfer (LET) values.

The LET is used to describe the average energy deposited per unit length (in keV/$\mu$m) in an absorber material. Limitations of the LET for precise assessment of the RBE have resulted in the development of a set of measurable stochastic quantities, such as the lineal energy which provides the fundamental basis for microdosimetry.

The lineal energy is used to describe the energy deposited by a single event, namely $\varepsilon$, in a micron-size sensitive volume, or microvolume, along the mean particle track length, $\bar{l}$, which is given by:

$$y = \frac{\varepsilon}{\bar{l}}$$

Several devices such as the tissue equivalent proportional counter (TEPC) or silicon-based semiconductor microdosimeter may be used for the measurement of microdosimetric spectra. Known TEPC consist of a tissue equivalent plastic sphere in a grounded aluminum shell. The sphere is filled with a tissue equivalent gas to simulate interactions with human tissue. This kind of detectors usually use centimeter-sized sensors, which is much larger than the size of a typical human cell.

Mini-TEPCs have been developed with cylindrical sensitive volumes having sizes of the order of a few tens of millimeters. Recently, different miniaturized tissue-equivalent gas detectors corresponding to operation at a nanometric level down to 35 nm have been developed for microdosimetry applications in radiotherapy.

TEPC detectors have had some success while tested in different therapeutic heavy ion beams but are still being further developed. Currently, to the knowledge of the inventors there is no commercial product and the construction of a mini-TEPC is a demanding operation requiring special knowledge and maintenance during use, e.g. for the supply of gases.

Limitations of TEPCs compared to microdosimetry include the need for high-voltage and for a gas supply system. Further limitations include so-called pulse pile-up problems, as well as a low spatial resolution due to a relatively large size of the sensitive volumes compared to other solid-state microdosimeters (which are in the $\mu$m size range).

Silicon-based microdosimeters, better known as silicon-on-insulator (SOI) microdosimeters, have also been developed over the last 20 years. Different generations of SOI devices have been designed.

The use of SOI microdosimeters in lineal energy measurements offers high spatial resolution and counting rates at low costs. Using the latest generation of silicon-based microdosimeters, a good agreement with the results from the well-established TEPCs was achieved.

However, a frequently raised issue is the question of tissue equivalence in the case of silicon (with Z = 14), leading to complex correction factors when compared to other materials such as diamond (Z = 6). Silicon-based sensors are therefore not optimal in this respect.

Diamond, with its unique physical properties (e.g. a large-band gap, temperature stability, fast drift velocity and low capacitance), has been identified as a promising candidate material to produce microdosimetry devices. Recently, significant developments in diamond-based microdosimetry have been made with various fabrication and operational approaches.

However, no known micro-dosimeters are completely satisfactory to fulfill all requirements for radiation Quality Assurance in hadron therapy.

Most of known micro-dosimeters need an additional dosimeter or Monte Carlo (MC) simulations for the verification of the dose. Therefore, the average absorbed dose (dose-depth profile) of the ion beams in water is measured using different commercially available tools in a separate run where conditions are assumed to be the same as for the micro-dosimetric run. These additional tools are placed at the same effective depth within a water phantom as the micro-dosimeters (along the central axis of the beam) to obtain a depth-dose profile of the beam and verify the quality of the measured micro-dosimetric spectra. In addition to the physical measurements of the absorbed dose, as mentioned above, Monte Carlo simulations of the entire clinical beamlines are made and used for the verification of the ion beam range.

The publication "A 3D lateral electrode structure for diamond based microdosimetry", Davis et al., Applied Physics Letters vol. 110 n. 1, 6 January 2017 concerns a so-called 3D lateral electrode structure (3D-LES) diamond-based detector prototype.

The publication "Electronic properties of a synthetic single-crystal diamond exposed to high temperatures and high radiation", Crnjac et al., Materials, vol. 13 n. 11, 29 May 2020 discloses a single-crystal CVD diamond detector prepared for high-temperature operation.

The publication "Characterization of a novel diamond-based microdosimeter prototype for radioprotection applications in space environments", Davis et al., IEEE Transactions on nuclear science, vol. 59 n. 6, 1 December 2012 relates to a diamond-based microdosimeter prototype comprising wall-less micro-sensitive volumes.

A system based on a Si-based MOSFET (Metal-Oxide-Semiconductor Field-Effect) transistor) allowing the simultaneous measurements of the absorbed dose and the micro-dosimetric spectra is disclosed in the publications Anatoly Rosenfeld et. al., "Simultaneous Macro and Micro Dosimetry with MOSFETs," IEEE Transactions on Nuclear Science, Vol 43, No. 6 (1996) and Grigori I. Kaplan," Integral and Pulse Mode Silicon Dosimetry for Dose Verification on Radiation Oncology Modalities," PhD thesis at CMRP University of Wollongong (2001).

The detector operates by collecting free charge produced by ionizing radiation in the depletion layer. The latter is extended by reverse biasing of the p-n junction, which is connected to a spectroscopy set up. A pulse-height spectrum of ionized radiation can be acquired, i.e. a micro-dosimetric spectrum.

The electric signal used for the integral dosimetry measurement with the MOSFET detector is the threshold voltage of the transistor, which exhibits a shift after irradiation. This radiation induced effect must be removed by annealing at 150-200°C after a few measurements.

The MOSFET detector can be simultaneously used for integral dosimetry of radiation dose and for differential spectroscopy.

However, the response of the MOSFET detector is strongly dependent on the particle LET angle with respect to the oxide electric field and to temperature.

A further significant limitation of this system is also the measurement of the lineal energy, because due to a high noise level, no lineal energies measurements below some level are possible.

Most important, the MOSFET's shift in threshold voltage requires as mentioned above a thermal treatment to reset the device and is not very practical. Also, after several irradiations the detector suffers permanent damage and cannot be re-used.

There thus exists a need to obviate the drawbacks of known systems for micro-dosimetry and benefit from a reliable system allowing an accurate simultaneous measurement of the absorbed dose and the micro-dosimetric spectra.

## Summary

The present invention relates to a system according to claim 1 for dosimetric and micro-dosimetric ionizing radiation characterization, comprising:

- at least one diamond-based sensor comprising at least one micro-sensitive volume,
- at least one micro-dosimetric readout channel comprising a charge sensitive preamplifier connected to said sensor for outputting a signal representative of the distribution of the energy deposited by the ionizing radiation in said at least one micro-sensitive volume,
- at least one dosimetry readout channel comprising a picoammeter for reading current induced by said ionizing radiation in said at least one micro-sensitive volume and generating a signal representative of a dose rate.

The picoammeter enables low DC current measurements corresponding to the dose rate (current at the plateau) and dose (integrated current).

The invention allows precise and accurate measurements of lineal energy spectra in the form of a calibrated pulse-height spectrum, which provide an essential input parameter, such as dose-mean lineal energy, for the calculation and thus prediction of the RBE for a specific cell type in in compliance with the MKM model.

The invention allows for example an 'in-flight' scan of the radiation field to get dose profiles, i.e. in 3D, then to identify 'points of interest' and measure micro-dosimetric spectra.

This dual measurement of dose rate and dose is made with a same sensor and is particularly useful for ion beam characterization in hadron therapy, as the knowledge of the lineal energy provides information about the effectiveness of the ion beam, while the dose rate may be used for the verification of the range of the ion beam and may help position the sensor within the irradiation field with high precision, which contributes to Quality Assurance (QA) improvement as well as radiobiological optimization of the treatment plans.

The invention allows the fabrication of a compact and user-friendly system with the ability to measure both quantities above with high spatial resolution at low noise and with the same sensor in a reliable manner. Furthermore, the sensor allows "pinpoint" measurements, for example within an area less than $1mm^2$, better less than $0.1mm^2$, for example about $0.05mm^2$. Accordingly, the system gives little perturbation to the field at the point of measurement, improving the precision and the reliability of such measurements.

In addition, thanks to the wide band gap of diamond the system has ability of measuring very low induced current signals. The sensor may exhibit a small leakage current, that may be in the order of 0.01pA or less, and a high sensitivity threshold for lineal energy, that may be of the order of 0.5 keV/$\mu$m (calculated for water equivalent) or less.

Moreover, due to the diamond physical properties, the sensor is more tissue equivalent and radiation hard when compared to the silicon-based sensors.

At last, no annealing is required to reset the sensor between two consecutive measurements.

Diamond-based sensor

In some embodiments, the diamond-based sensor comprises at least two micro-sensitive volumes having respective electrodes, the at least one micro-dosimetric readout channel and the at least one dosimetry readout channel being connected to these respective electrodes.

In some other embodiments, the at least one micro-sensitive volume is connected to top and back electrodes, the at least one micro-dosimetric readout channel and the at least one picoammeter being connected respectively to these top and back electrodes, or vice-versa. A bias voltage may be applied to the top electrode or to the back electrode through the picoammeter.

In some other embodiments, the at least one micro-dosimetric readout system and the at least one dosimetry readout channel are connected to a same electrode, preferably a top electrode. The charge sensitive amplifier may be connected to the corresponding electrode through a decoupling capacitor.

When a bias voltage is applied, it may range from 0 to 100 V or more, so that the electric field induced by the bias voltage is for example of the order of 10V/micron.

Preferably, the sensor comprises a non-electrically active material extending around said at least one micro-sensitive volume.

Non-electrically active material

In the context of the invention, a "non-electrically active material" refers to a material that creates substantially no directional drift of radiation-induced free charge carriers under an electric field. While incident radiation such as an ion beam may create free charge carriers in the non-electrically active material, the lifetime of the free charge carriers in the non-electrically active material is very short, e.g. on the order of a picosecond.

As a result, under typical conditions, e.g. under electric fields of 0-100 V/$\mu$m, no measurable signal is generated in the non-electrically active material.

Examples of suitable non-electrically active materials include radiation hard resists such as epoxy-based resins (e.g. SU-8), polymers such as PMMA, and some inorganic materials such as glass.

The non-electrically active material may have a planar configuration and/or be of a substantially constant thickness, preferably having a same thickness as the micro-sensitive volumes.

The non-electrically active material preferably extends in contact with and around the entire periphery of each one of the micro-sensitive volumes.

Preferably, the non-electrically active material fills all the space between the micro-sensitive volumes, leaving no voids between them.

The non-electrically active material may be rigid or flexible.

The micro-sensitive volumes may be mechanically supported by the non-electrically active material, and the latter may be supported only at its periphery by a frame, preferably a diamond-based frame made of a same material as the micro-sensitive volumes.

The non-electrically active material may support metal electrodes that covers both the micro-sensitive volumes and the non-electrically active material.

The non-electrically active material may support a doped layer or cover a doped layer.

The non-electrically active material may be superposed entirely to a substrate, for example a HPHT (high pressure high temperature) or CVD diamond substrate.

The non-electrically substrate may support conductive tracks extending along its thickness.

Micro-sensitive volumes

The sensor comprises at least one micro-sensitive volume, preferably an array of micro-sensitive volumes.

The micro-sensitive volume may have a cylindrical shape, preferably with a symmetry of revolution. In some variants, the micro-sensitive volume has a hemispherical or spherical shape.

A thickness of the micro-sensitive volume may range from 0.1 to 500 $\mu$m, better from 1 to 50 $\mu$m and in particular from 1 to 20 $\mu$m.

A diameter or largest dimension in cross-section of the micro-sensitive volume may range from 0.5 to 500 $\mu$m, better from 1 to 100 $\mu$m, even better from 5 to 100 $\mu$m or 10 to 100 $\mu$m.

The volume of one micro-sensitive volume may range from 1 $\mu$m$^3$ to 1000000 $\mu$m$^3$, better from 1 to 50000 and even better from 1 to 2500 $\mu$m$^3$.

The micro-sensitive volume is preferably made of Single Crystalline Chemical Vapor Deposited (scCVD) diamond.

A top electrode connected to the dosimetry and/or micro-dosimetry readout channel(s) may interconnect several micro-sensitive volumes of an array of micro-sensitive volumes of the sensor. The number of interconnected micro-sensitive volumes may range from 1 to several thousands.

The number of micro-sensitive volumes of the sensor may range from 1 to several thousands.

At least some micro-sensitive volumes, preferably all micro-sensitive volumes, are surrounded by said non-electrically active material where no directional charge drift under the presence of electric field takes place.

In some variants, the micro-sensitive volume is surrounded by a Guard Ring (GR) electrode, as disclosed in I. A. Zahradnik et al., "A diamond guard ring microdosimeter for ion beam therapy," Rev. Sci. Instrum. 91, 054102 (2020). Such a sensor is referred to below as the "GR sensor".

The micro-sensitive volumes may also be defined by a boron-doped diamond deposited on top of intrinsic diamond as in the so-called self-biased "p+ sensor" disclosed in the publication "scCVD diamond membrane based microdosimeter for hadron therapy", IA Zahradnik, MT Pomorski, L De Marzi, D Tromson, P Barberet, N Skukan, ...Physica Status Solidi (a) 215 (22), 1800383.

All micro-sensitive volumes of the sensor may be of a same thickness, or in a variant of different thicknesses.

Micro-sensitive volumes of different thicknesses may be connected to respective readout channels.

The micro-sensitive volumes may have end faces in contact with respective top and back electrodes.

The terms "top" and "back" refer to one orientation of the sensor. The sensor may be used in any appropriate orientation with respect to the incident radiation, and the top electrode may or not be facing the incident radiation.

A micro-sensitive volume may be in contact or not with a doped layer, for example a p or p+ type or n or n+ type doped layer, preferably a p+ doped layer or a n+ doped layer, for example a p+ boron doped layer or a n+ phosphorus doped layer.

The electrodes may be metal based or carbon-based electrodes. An electrode may be constituted at least partially by a doped layer.

Signal processing

The system preferably comprises processing means for generating a Lineal Energy Spectrum (LES) based on signals outputted by the at least one micro-dosimetric readout channel, and preferably also an RBE based on said lineal energy spectrum.

The system preferably comprises processing means for integrating the dose rate signal provided by the picoammeter and generate dose data.

The processing means may comprise any computer such as a personal computer or specialized hardware such as microcontroller or FPGA circuit. The processing means may comprise any interface for signal processing, for example Multi Channel Analyzer, A/D converter, filters, amplifiers, etc.

Method

The invention also relates to a method according to claim 12, for assessing the dose and lineal energy spectra of an ionizing radiation, comprising measuring the dose rate and the deposited energy distribution using a system as defined above. This measurement may be performed simultaneously and with a same sensor, each with at least one micro-sensitive volume connected to micro-dosimetric and dosimetric readout channels or with at least two different micro-sensitive volumes connected respectively to a micro-dosimetric readout channel and to a dosimetric readout channel. The sensor may be placed after a water or plastics phantom or within a water phantom.

The ionizing radiation may be a hadron therapy ion beam, for example a proton beam or a beam of heavier ions such as carbon ions. The ion beam may be produced by Pencil Beam Scanning (PBS) or by passive scattering (so-called double scattering (DS)) delivery techniques.

The method of the invention is also useful when the ionizing radiation is space radiation.

**Brief description of the drawings**

In the drawings:

Fig.1 illustrates an example of a system in accordance with the present invention,
Figs. 2 to 5 show examples of readout configurations,
Figs. 6 to 8 illustrate an example of experimental set-up,
Fig. 9 is a more detailed view of an example of sensor, and
Figs. 10A to 10J illustrate the microfabrication of the sensor of Fig.9.

**Detailed description**

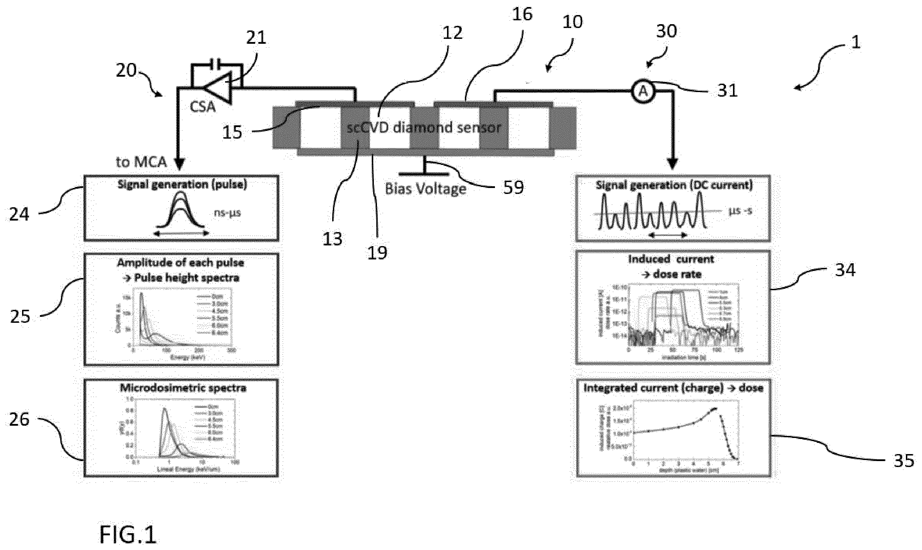

The system 1 shown in Fig.1 comprises a diamond-based sensor 10 and two readout channels 20 and 30 for respective micro-dosimetric spectrum and dosimetry measurements.

The sensor 10 defines an array of micro-sensitive volumes 12 that are each responsive to an incident ion beam.

These micro-sensitive volumes 12 are preferably made of scCVD diamond and extend between top electrodes, two of them (being referred to as 15 and 16) being shown in the Figures, and a back electrode 19, which may be metallic or made by other materials such as carbon-based materials for example.

Each top electrode 15 or 16 may contact a respective set of micro-sensitive volumes 12 arranged in an array, as shown. In a variant (not shown), each top electrode contacts only one respective micro-sensitive volume 12.

A non-electrically active material 13 such as an epoxy-based resist or PMMA, may extend around each micro-sensitive volume 12, as shown, to improve the performances of the sensor 10 by isolating each micro-sensitive volume from charge diffusion from the neighboring material.

Each micro-sensitive volume 12 may be of a cylindrical shape with a diameter in the range 10-60 microns for example, and a thickness no greater than 10 microns.

The back electrode 19 is connected to all micro-sensitive volumes 12.

This back electrode 13 may be connected by a connection 59 to a bias voltage source.

The top electrode 15 is connected to a first readout channel 20 for micro-dosimetry measurement. The other top electrode 16 is connected to a second readout channel 30 for dosimetry measurement.

Other top electrodes (not shown) may be connected similarly to corresponding readout channels (not shown).

The first readout channel 20 comprises a Charge Sensitive Amplifier (CSA) 21, known per se, which outputs a voltage based on the integration of the current induced by a single passing particle through a corresponding volume at the input. The integration time is typically very short here, below 1ns.

The CSA is connected to a Multi-Channel Analyzer (MCA) which may further amplify and digitize the signal. The latter may be, as shown in Figure 1, a pulse 24 and the processing may result in generating for a given travel distance in a phantom, such as a water phantom or a plastics phantom, a pulse height spectrum 25 figuring the number of counts (as ordinate) with respect to the Energy (as abscissa).

These generated pulse-height spectra may then be calibrated with energy and converted to lineal energy spectra 26 which allows to calculate for each depth (position in the Bragg curve) the dose-mean lineal energy and allows to estimate the cell specific RBE in compliance with the MKM model, as disclosed for example in I. A. Zahradnik et al., "scCVD diamond membrane based microdosimeter for hadron therapy," Phys. Status Solidi A 215, 1800383 (2018).

The second readout channel 30 comprises a picoammeter 31 that measures the DC current induced by the beam in the sensor 10. A relative dose rate 34 may be estimated at the measured curves plateau. The integration of this current curve results in a measured collected charge and provides the information 35 about the dose.

The micro-dosimetric spectrum 26 provides information allowing to compute the dose-mean lineal energy to estimate the cell specific RBE in compliance with the MKM model, as explained above, while the simultaneous measurement of the dose may be used additionally for the verification of the 3D dose profiles, and the position of the sensor within the irradiation field with high precision (dosimetry).

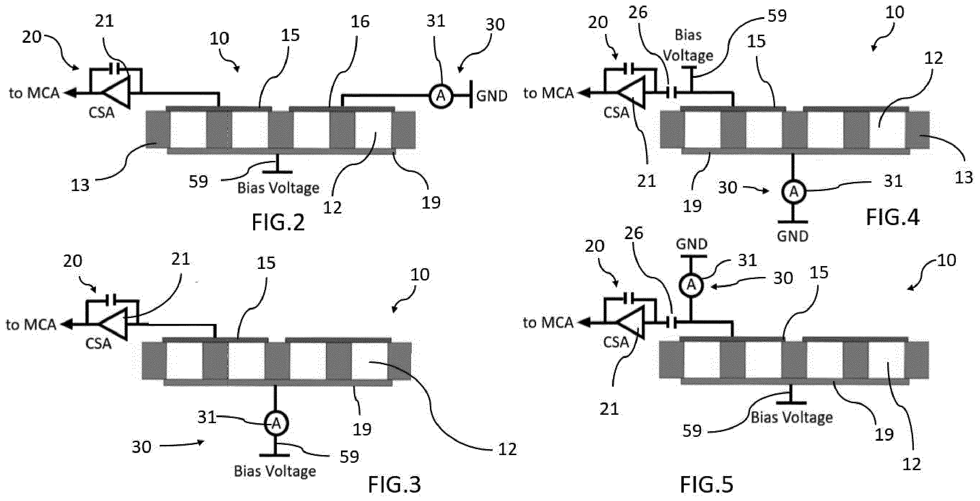

The picoammeter 31 of the embodiment of Figure 1 may be connected to ground GND, as illustrated in Figure 2.

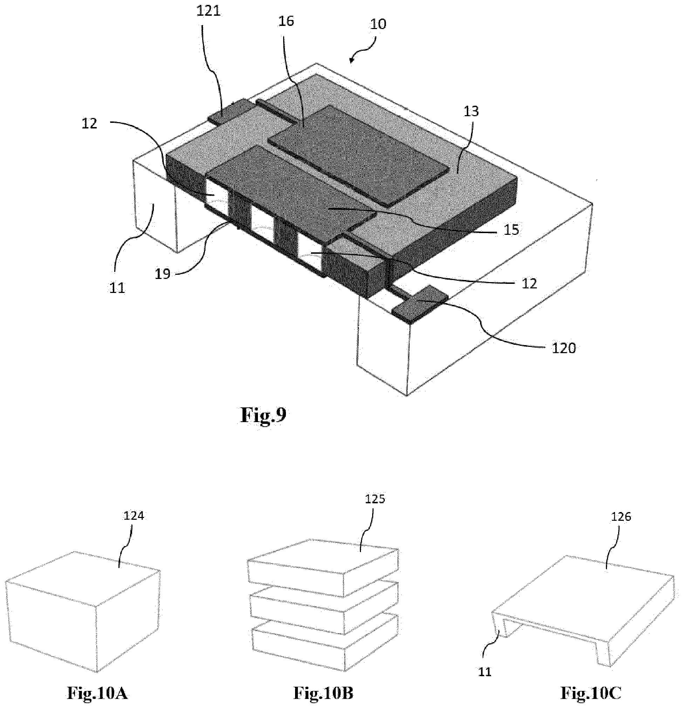

Figure 9 shows in more details a possible structure for the sensor of Figures 1 and 2, where the array of single solid-state micro-sensitive volumes is embedded within a non-electrically active material. This sensor is referred to as "fully 3D sensor".

The invention also works with other types of diamond-based sensors, such as the "GR sensor" or "p+ sensor" mentioned above.

The layer of non-electrically active material 13 may be supported by a frame 11 as shown.

This frame 11 may support bonding pads 120 and 121 connected to respective top electrodes, as shown, and to the readout channels.

The sensor 10 of Figure 9 may be microfabricated as illustrated in Figures 10A to 10I.

Firstly, a diamond plate 124 is provided (Figure 10A). The diamond plate is preferably between 300 and 1000 $\mu$m thick and may be made of single crystal chemical vapor deposition (scCVD) raw synthetic diamond.

As shown in Figure 10B, the diamond plate 124 is then sliced in thin plates 125 with a preferred thickness of 20 $\mu$m to 60 $\mu$m, and polished. The surface area of the thin plates may be comprised between 3x3 mm$^2$ and $1 \times 1$ cm$^2$.

Next, the thin plate 125 is etched to create an ultra-thin membrane 126 with a thickness smaller than or equal to 20 $\mu$m, suspended over a bulky frame 11 (Figure 10C). The ultra-thin membrane 126 may have the same surface area as the original thin plate. The bulky frame 11 may be U-shaped when viewed in a direction orthogonal to the plane of the membrane.

In order to obtain the ultra-thin membrane 126, a deep Ar/O$_2$ plasma etching is used, following the method described e.g. in M. Pomorski et al., "Super-thin single crystal diamond membrane radiation detectors," Appl. Phys. Lett. 103, 112106 (2013).

The ultra-thin diamond membrane 126 is advantageously cleaned with hydrofluoric acid and a hot acid treatment in order to eliminate possible surface contamination.

Optionally, the sample is fixed onto a silicon wafer in order to achieve a better structural stability for the following processing steps. To do so, a thin layer of photoresist is spin coated on the silicon wafer and the sample placed on it with its top side facing up. The photoresist is then hardened by soft baking for a few minutes, for instance at a temperature of 100 °C.

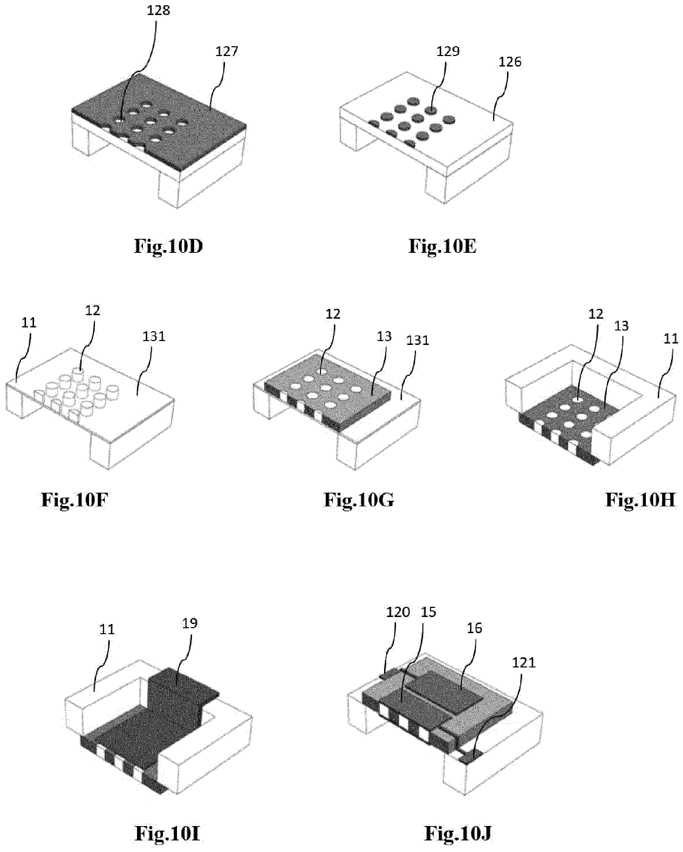

In the next step, as shown in Figure10D, a positive epoxy-based resist 127 is deposited on the diamond membrane. Photolithographic patterning is then performed using UV light. In other words, only specific areas of the resist layer 127 are exposed to the UV light, such that the resist from these specific areas may be removed. This creates empty volumes 128 that allow a direct access to the intrinsic diamond membrane 126 through the resist layer 127.

Next, a layer of chromium (Cr) which may be 200 $\mu$m to 600 $\mu$m thick is deposited onto the top side of the diamond membrane 126. The sample may then be gently rinsed with acetone in order to detach the residual photoresist layer (lift-off technique). A metallic Cr mask 129 on the diamond membrane 126 is thus obtained (Figure 10E). A wet etch approach may also be used to obtain the Cr mask 129. Acetone rinsing may be used to remove the sample from the silicon wafer.

Next, as shown in Figure 10F, Ar/O$_2$ Reactive Ion Etching (RIE) is carried out to create the single-standing micro-sensitive volumes 12 within the diamond membrane 126. Due to the higher etching selectivity for diamond compared with the Cr mask 129, micro-sized volumes of diamond are etched beneath the metal mask.

The diamond membrane 126 is not fully etched through: a residual layer 131 of intrinsic diamond, which may be approximately 5 $\mu$m thick, is left as a layer supporting the $\mu$SVs 12.

A chromium etchant followed by a gentle hot acid cleaning treatment may then be applied to the etched membrane, in order to remove the residual Cr-mask and possible surface contamination of the sample. Isopropanol rinsing and blow-drying may be carried out. Additionally, Ar plasma may be used to ensure that the surface of the sample is clean from any organic contamination before further processing.

Next, a layer 13 of non-electrically active material is spin coated onto the supporting layer 131 as illustrated in Figure 10G. The layer 13 may be made of a hard baked radiation hard resist or PMMA, for example an epoxy-based SU-8 photoresist.

To limit the layer 13 to regions closely surrounding the $\mu$SVs 12, photolithographic patterning may be performed using UV light. In other words, only specific areas of the resist layer 13 are exposed to the UV light, such that the resist from these specific areas may be removed.

The following step, depicted in Figure 10H, consists in removing the residual diamond layer 131 from the bottom side of the non-electrically active layer 13. To do so, Ar/O$_2$ reactive ion etching may be used.

Then, as shown in Figure 10I, the bottom electrode 19 which may be metal-based, preferably aluminum-based, is deposited as a large strip on the bottom side of the layer 13 and of the array of $\mu$SVs 12. The electrode 19 acts as a full pad back electrode for the sensor and provides improved mechanical stability.

Finally, as shown in Figure 10J, top electrodes on the top side of the layer 13 and of the $\mu$SVs 12 are deposited.

To this end, the sample may be fixed on a silicon wafer following the procedure described previously. To create multiple patterned electrodes 15, 16, covering only the area closest to the $\mu$SVs 12, a standard resist is spin coated onto the sample. Using photolithography, resist patterns can be created which will define the top electrical contacts 15, 16 and the bonding pads 120, 121.

In the case of metal-based electrodes, a wet etch technique may be applied: using a specific metal etchant, all metallization except the regions covered by the resist is removed. In the case of carbon-based electrodes, a lift-off technique may be used instead.

The sensor 10 is then ready for mounting onto an appropriate sensor carrier and for wire-bonding. The sensor may be integrated into a PCB with connectors (for example of the SMA type) for connection to read out electronics.

Figure 3 shows a variant embodiment where the picoammeter 31 is connected between the back electrode 19 and the bias voltage source.

The CSA 21 is connected to the top electrode 15 as in the embodiment of Figures 1 and 2.

In this embodiment, the same set of micro-sensitive volumes 12 provides the signal that is read out by the first and second readout channels 20 and 30, contrary to the embodiment of Figures 1 and 2 where the signals come from respective sets of micro-sensitive volumes 12.

In the embodiment of Figure 4, the picoammeter 31 is connected between the back electrode 19 and the ground GND. The CSA 21 is connected through a decoupling capacitor 26 to the top electrode 15. The latter is connected by a connection 59 to a source of biasing voltage.

In the variant of Figure 5, the back electrode 19 is connected via a connection 59 to a source of biasing voltage.

The picoammeter 31 is connected between the top electrode 15 and the ground GND. The CSA 21 is connected through a decoupling capacitor 26 to the top electrode 15.

In the examples shown where the readout channels are connected respectively to the top and back electrodes, there is also a possibility for reverse configuration, i.e. the readout channel connected to the top electrode is then connected to the back electrode and the read out channel connected to the back electrode is then connected to the top electrode. Such reverse configuration is however not preferred as it may worsen the signal if the electrodes are not of a similar size, causing the electric field to be inhomogeneous.

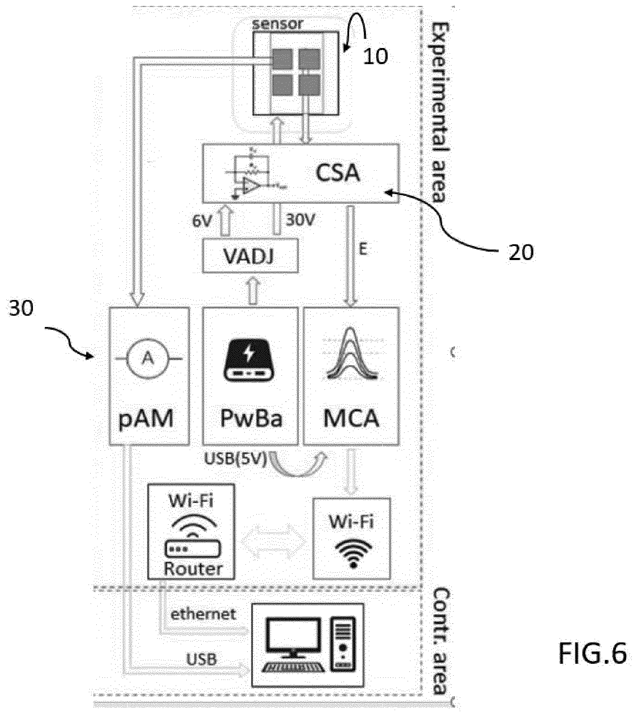

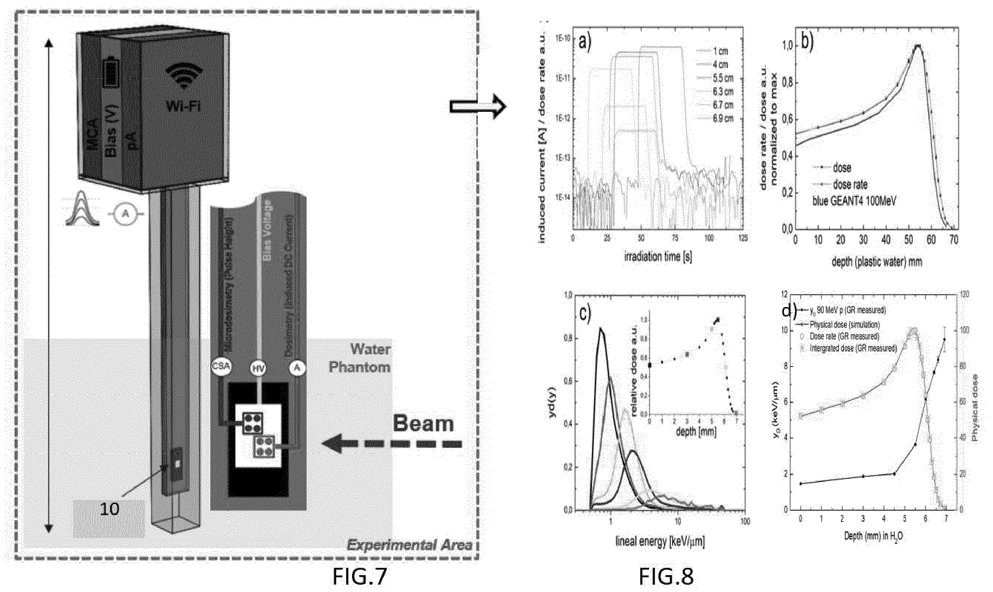

An example of experimental set-up is shown in Figures 6 and 7, to characterize an incident proton beam in different water phantom travel distances.

The sensor has the configuration of Figures 1 and 2 for example, or may have any other appropriate configuration, and be for example a "GR sensor" or a "p+ sensor".

The output for the micro-dosimetric spectrum (pulse-height) measurement from one set of micro-sensitive volumes 12 is fed into a charge sensitive preamplifier (CSA) Amptek CoolFET [AMPTEK]. A positive bias voltage fixed to 15V equivalent to an electric field within the micro-sensitive volumes (also referred to as µSVs) of 1.2 V/µm during the entire experiment, is applied directly to the back electrode of the sensor. The positive bias voltage is established by a voltage adjustment element (VADJ).

The pre-amplified voltage pulses from the CSA, previously induced by single ionizing particles in the micro-sensitive volumes of the sensor 10, are fed into a multi-channel analyzer LabZY nanoMCA II (MCA). The MCA amplifies and digitizes the signal, as well as processes the generated pulse-height spectra while communicating with a personal computer (PC) situated in the control area through a Wi-Fi network for example.

The beam induced DC current from another set of micro-sensitive volumes 12 of the same sensor is fed into a high precision Keithley Picoammeter (pAM) for the dose rate and depth-dose profile measurement.

In Figure 8 the results are summarized. The induced current curves corresponding to the dose rate during irradiation with a 90 MeV proton beams for various depths in plastic water phantom are shown in a). Remarkably low leakage current values (I < < 1pA) can be observed when the proton beam is off. The relative dose rate (current at the plateau), dose (integrated current) and a rough GEANT4 simulation of the 100MeV proton beam are compared in b). A perfect agreement between both measured quantities and a good agreement with the simulated proton beam range, confirm the system's ability to measure simultaneously reliable depth-dose profile curves. Additionally, the very good agreement between the dose and dose rate indicates a possibility of fast scanning in water phantoms if only constant dose rate is guaranteed at accelerator level. Finally, in c) the calibrated micro-dosimetric spectrum for selected depth within the measured Bragg Peak are presented and exhibit typical and expected shift of their peak as well as a broader spectrum towards greater LET values. In d) the measured dose-mean lineal energy values are presented with which the RBE of a specific cell type can be estimated in compliance with the MKM model.

These results demonstrate a great performance of the system as a QA tool in the hadron therapy.

The invention is not limited to the disclosed embodiments and is defined by the appended claims. For example, other diamond-based sensors may be used such as the "p+ sensor" or "GR sensor" mentioned above.

**Claims**

1. A system for dosimetric and micro-dosimetric ionizing radiation characterization, comprising:

- at least one diamond-based sensor (10) comprising at least one micro-sensitive volume (12),
- at least one micro-dosimetric readout channel (20) comprising a charge sensitive preamplifier (CSA) connected to said sensor for outputting a signal representative of the distribution of the energy deposited by the ionizing radiation impacting said at least one micro-sensitive volume (12),

**characterized in that** said system further comprises

- at least one dosimetry readout channel (30) comprising a picoammeter (31) for reading current induced by said ionizing radiation in said at least one micro-sensitive volume (12) and generating a signal representative of a dose rate.

2. The system of claim 1, the diamond-based sensor (10) comprising at least two micro-sensitive volumes (12) having respective electrodes (15; 16), the at least one micro-dosimetric readout channel (20) and the at least one dosimetry readout channel (30) being connected to these respective electrodes.

3. The system of claim 1, the at least one micro-dosimetric readout channel (20) and the at least one dosimetry readout channel (30) being connected to a same electrode (15).

4. The system of claim 2 or 3, the charge sensitive amplifier (21) being connected to the corresponding electrode (15) through a decoupling capacitor (26).

5. The system of claim 1, the at least one micro-sensitive volume (12) being connected to top (15) and back (19) electrodes, the at least one micro-dosimetric readout channel (20) and the at least one picoammeter (31) being connected respectively to these top (15) and back (19) electrodes, or vice-versa.

6. The system of claim 5, a bias voltage being applied to the top electrode (15) to which the micro-dosimetric readout channel (20) is connected.

7. The system of claims 5 or 6, the charge sensitive amplifier (21) being connected to the top electrode (15) through a decoupling capacitor (26).

8. The system of claim 7, a bias voltage being applied to the picoammeter (31).

9. The system of any one of claims 1 to 8, the sensor comprising a non-electrically active material (13) extending around said at least one micro-sensitive volume (12), preferably a resist.

10. The system of any one of claims 1 to 9, comprising processing means for generating a lineal energy spectrum based on signals outputted by the at least one micro-dosimetric readout channel, and preferably also a dose mean lineal energy based on said lineal energy spectrum.

11. The system of any one of claims 1 to 10, comprising processing means for integrating the dose rate and generate dose data.

12. A method for assessing the dose and lineal energy spectra of an ionizing radiation, comprising measuring the dose rate and the deposited energy distribution using a system as defined in any one of the preceding claims.

13. The method of claim 13, the ionizing radiation being a hadron therapy ion beam.

14. The method of claim 13, the ionizing radiation being space radiation.

**Patentansprüche**

1. System zur dosimetrischen und mikrodosimetrischen Charakterisierung ionisierender Strahlung, das Folgendes umfasst:

   - mindestens einen diamantbasierten Sensor (10), der mindestens ein mikrosensitives Volumen (12) umfasst,
   - mindestens einen mikrodosimetrischen Auslesekanal (20), der einen ladungssensitiven Vorverstärker (CSA) umfasst, das mit dem Sensor verbunden ist, um ein Signal auszugeben, dass die Verteilung der Energie darstellt, die durch die ionisierende Strahlung abgegeben wird, die auf das mindestens eine mikrosensitive Volumen (12) auftrifft,

   **dadurch gekennzeichnet, dass** das System ferner Folgendes umfasst:

   - mindestens einen Dosimetrie-Auslesekanal (30), der ein Piko-Ampèremeter (31) zum Auslesen von Strom, der durch die ionisierende Strahlung in dem mindestens einen berührungssensitive Volumen (12) induziert wird, und zum Erzeugen eines Signals, das eine Dosisrate darstellt, umfasst.

2. System nach Anspruch 1, wobei der diamantbasierte Sensor (10) mindestens zwei mikrosensitive Volumina (12) umfasst, die jeweilige Elektroden (15; 16) aufweisen, wobei der mindestens eine mikrodosimetrische Auslesekanal (20) und der mindestens eine Dosimetrie-Auslesekanal (30) mit diesen jeweiligen Elektroden verbunden sind.

3. System nach Anspruch 1, wobei der mindestens eine mikrodosimetrische Auslesekanal (20) und der mindestens eine Dosimetrie-Auslesekanal (30) mit derselben Elektrode (15) verbunden sind.

4. System nach Anspruch 2 oder 3, wobei der ladungssensitive Verstärker (21) mit der entsprechenden Elektrode (15) durch einen Entkopplungskondensator (26) verbunden ist.

5. System nach Anspruch 1, wobei das mindestens eine mikrosensitive Volumen (12) mit einer oberen (15) und einer hinteren (19) Elektrode verbunden ist, der mindestens eine mikrodosimetrische Auslesekanal (20) und das mindestens eine Piko-Ampèremeter (31) mit der oberen (15) bzw. der hinteren (19) Elektrode verbunden sind, oder umgekehrt.

6. System nach Anspruch 5, wobei eine Vorspannung an die obere Elektrode (15) angelegt wird, mit der der mikrodosimetrische Auslesekanal (20) verbunden ist.

7. System nach Anspruch 5 oder 6, wobei der ladungssensitive Verstärker (21) durch einen Entkopplungskondensator (26) mit der oberen Elektrode (15) verbunden ist.

8. System nach Anspruch 7, wobei eine Vorspannung an das Piko-Ampèremeter (31) angelegt wird.

9. System nach einem der Ansprüche 1 bis 8, wobei der Sensor ein nicht elektrisch aktives Material (13) umfasst, das sich um mindestens ein mikrosensitives Volumen (12) erstreckt, bevorzugt einen Schutzlack.

10. System nach einem der Ansprüche 1 bis 9, das Verarbeitungsmittel zum Erzeugen eines linearen Energiespektrums basierend auf Signalen, die durch den mindestens einen mikrodosimetrischen Auslesekanal ausgegeben werden, und bevorzugt auch einer mittleren linearen Energie der Dosis basierend auf dem linearen Energiespektrum, umfasst.

11. System nach einem der Ansprüche 1 bis 10, das Verarbeitungsmittel zum Integrieren der Dosisrate und zum Erzeugen von Dosisdaten umfasst.

12. Verfahren zum Bewerten der Dosis und der linearen Energiespektren einer ionisierenden Strahlung, das das Messen der Dosisrate und der Verteilung der abgegebenen Energie unter Verwendung eines Systems nach einem der vorhergehenden Ansprüche umfasst.

**13.** Verfahren nach Anspruch 13, wobei die ionisierende Strahlung ein Hadronentherapie-Ionenstrahl ist.

**14.** Verfahren nach Anspruch 13, wobei die ionisierende Strahlung Weltraumstrahlung ist.

**Revendications**

**1.** Système de caractérisation dosimétrique et micro-dosimétrique d'un rayonnement ionisant, comprenant :

- au moins un capteur à base de diamant (10) comprenant au moins un volume micro-sensible (12),
- au moins un canal de lecture micro-dosimétrique (20) comprenant un préamplificateur sensible à la charge (CSA) connecté audit capteur, destiné à délivrer un signal représentant la distribution de l'énergie déposée par le rayonnement ionisant impactant ledit au moins un volume micro-sensible (12),

ledit système étant **caractérisé en ce qu'**il comprend en outre

- au moins un canal de lecture dosimétrique (30) comprenant un picoampèremètre (31) destiné à lire le courant induit par ledit rayonnement ionisant dans ledit au moins un volume micro-sensible (12) et à générer un signal représentant un débit de dose.

**2.** Système selon la revendication 1, le capteur à base de diamant (10) comprenant au moins deux volumes micro-sensibles (12) pourvus d'électrodes (15 ; 16) respectives, l'au moins un canal de lecture micro-dosimétrique (20) et l'au moins un canal de lecture dosimétrique (30) étant connectés à ces électrodes respectives.

**3.** Système selon la revendication 1, l'au moins un canal de lecture micro-dosimétrique (20) et l'au moins un canal de lecture dosimétrique (30) étant connectés à une même électrode (15).

**4.** Système selon la revendication 2 ou 3, l'amplificateur sensible à la charge (21) étant connecté à l'électrode (15) correspondante par le biais d'un condensateur de découplage (26).

**5.** Système selon la revendication 1, l'au moins un volume micro-sensible (12) étant connecté à des électrodes supérieure (15) et arrière (19), l'au moins un canal de lecture micro-dosimétrique (20) et l'au moins un picoampèremètre (31) étant connectés respectivement à ces électrodes supérieure (15) et arrière (19), ou inversement.

**6.** Système selon la revendication 5, une tension de polarisation étant appliquée à l'électrode supérieure (15) à laquelle le canal de lecture micro-dosimétrique (20) est connecté.

**7.** Système selon les revendications 5 ou 6, l'amplificateur sensible à la charge (21) étant connecté à l'électrode supérieure (15) par le biais d'un condensateur de découplage (26).

**8.** Système selon la revendication 7, une tension de polarisation étant appliquée au picoampèremètre (31).

**9.** Système selon l'une quelconque des revendications 1 à 8, le capteur comprenant un matériau non électriquement actif (13) s'étendant autour dudit au moins un volume micro-sensible (12), de préférence un résist.

**10.** Système selon l'une quelconque des revendications 1 à 9, comprenant des moyens de traitement destinés à générer un spectre d'énergie linéale sur la base de signaux délivrés par l'au moins un canal de lecture micro-dosimétrique et, de préférence, également une énergie linéale moyenne en dose sur la base dudit spectre d'énergie linéale.

**11.** Système selon l'une quelconque des revendications 1 à 10, comprenant des moyens de traitement destinés à intégrer le débit de dose et générer des données de dose.

**12.** Procédé d'évaluation de la dose et de spectres d'énergie linéale d'un rayonnement ionisant, comprenant la mesure du débit de dose et de la distribution de l'énergie déposée au moyen d'un système tel que défini dans l'une quelconque des revendications précédentes.

**13.** Procédé selon la revendication 13, le rayonnement ionisant étant un faisceau ionique en hadronthérapie.

**14.** Procédé selon la revendication 13, le rayonnement ionisant étant un rayonnement de l'espace.

FIG.1

FIG.2

FIG.3

FIG.4

FIG.5

FIG.6

FIG.8

FIG.7

**Fig.9**

**Fig.10A**

**Fig.10B**

**Fig.10C**

128

127

**Fig.10D**

129

126

**Fig.10E**

11    12    131

**Fig.10F**

12    13    131

**Fig.10G**

12    13    11

**Fig.10H**

11    19

**Fig.10I**

120    15    16    121

**Fig.10J**

**REFERENCES CITED IN THE DESCRIPTION**

**Non-patent literature cited in the description**

- **DAVIS et al.** A 3D lateral electrode structure for diamond based microdosimetry. *Applied Physics Letters*, 06 January 2017, vol. 110 (1)
- **CRNJAC et al.** Electronic properties of a synthetic single-crystal diamond exposed to high temperatures and high radiation. *Materials*, 29 May 2020, vol. 13 (11)
- **DAVIS et al.** Characterization of a novel diamond-based microdosimeter prototype for radioprotection applications in space environments. *IEEE Transactions on nuclear science*, 01 December 2012, vol. 59 (6)
- **ANATOLY ROSENFELD**. Simultaneous Macro and Micro Dosimetry with MOSFETs. *IEEE Transactions on Nuclear Science*, 1996, vol. 43 (6)
- **GRIGORI I. KAPLAN**. Integral and Pulse Mode Silicon Dosimetry for Dose Verification on Radiation Oncology Modalities. *PhD thesis at CMRP University of Wollongong*, 2001
- **I. A. ZAHRADNIK et al.** A diamond guard ring microdosimeter for ion beam therapy. *Rev. Sci. Instrum.*, 2020, vol. 91, 054102
- **I. A. ZAHRADNIK et al.** scCVD diamond membrane based microdosimeter for hadron therapy. *Phys. Status Solidi A*, 2018, vol. 215, 1800383
- **M. POMORSKI et al.** uper-thin single crystal diamond membrane radiation detectors,. *Appl. Phys. Lett.*, 2013, vol. 103, 112106